# EUROPEAN PATENT APPLICATION

(11) **EP 4 819 485 A1**
(43) Date of publication of application: **07.10.2026**
(21) Application number: 26165724.1
(22) Date of filing: 18.03.2026
(51) Int. Cl.: H02S 40/34, H01R 4/48, H01R 13/193

(54) **PASS-THROUGH TRANSITION ENCLOSURE**

(30) Priority: 31.03.2025 US 202519096131
(71) Applicant: Tesla, Inc., Austin, TX 78725 (US)
(72) Inventor: PASHKEVYCH, Mykola, Austin, TX 78725 (US)
(74) Representative: Liesegang, Eva

(57) **Abstract**

A system including an enclosure is described herein, the enclosure having a housing and a lid coupled to the housing, the housing defining a first aperture and a second aperture. The system may include a pass-through connector coupled to an interior surface of the enclosure. The pass-through connector may comprise a body having an interior curved edge; a cap coupled to the body and comprising a pivot pin, wherein the pivot pin and the interior curved edge define a channel in the interior; a contact spring positioned in part within the channel; a terminal having a fastening region and a contact region; and an actuator having a first end and a second end, wherein the second end is in contact with the contact spring.

## Description

### TECHNICAL FIELD

This application relates generally to electrical conductor pass-through enclosures.

### BACKGROUND

Solar photovoltaic array systems require a reliable method to transition electrical connections between photovoltaic modules and power loads, such as an electrical inverter. This transition may involve connecting multiple photovoltaic strings while managing wire routing. However, conventional solutions often involve multiple bulky components, complex installations, and additional costs due to the need for intermediary junctions, external terminals, or pre-attached long leads.

As solar technology becomes more prevalent, there is an increasing demand for compact, serviceable, and easy-to-install wiring transition systems that can fit within confined spaces, such as under solar panels or roofing materials, without compromising accessibility or weather resistance.

### SUMMARY

For the aforementioned reasons, there is a need for improved methods and systems for an integrated electrical transition enclosure and wire connection system that simplifies installation, enhances serviceability, and reduces overall footprint and height for compact installation while maintaining protection from external environmental factors. It is understood that the implementations of the systems and methods described herein may satisfy more, fewer, or different needs than those improvements described above without departing from the scope of the descriptions herein.

As described in further detail herein, an electrical pass-through transition enclosure may be used to transition between one or more photovoltaic modules and a power load such as an inverter. The electrical pass-through transition enclosure with one or more pass-through connectors allows electrical wires to be securely connected and transitioned within a sealed, weather-resistant housing while being mounted under the photovoltaic modules. The enclosure includes a removable lid, making it easy to access internal connections for installation and maintenance, while also providing environmental protection against moisture, dust, and debris.

Within the enclosure is one or more pass-through connectors, which feature a body, cap, contact spring, and actuator. The contact spring provides a firm electrical connection by gripping an inserted conductor, while the actuator allows for tool-free installation and removal of wires. The actuator has bimodal stability which allows it to securely lock in both an open (receiving) and closed (holding) position. In some embodiments, the system also includes extension conductors that exit the enclosure through designated apertures and have conductive connectors at the end, facilitating electrical transitions between different wiring types.

In one implementation, a system may include: an enclosure including: a housing defining a first aperture and a second aperture; and a lid removably coupled to the housing; and a pass-through connector coupled to an interior surface of the enclosure, the pass-through connector including: a body having an interior curved edge; a cap coupled to the body and defining an interior between the body and the cap, the cap including a pivot pin, wherein the pivot pin and the interior curved edge define a channel in the interior; a contact spring positioned in part within the channel; a terminal having a fastening region and a contact region, wherein the fastening region is positioned exterior to the interior defined by the body and the cap, and wherein the contact region is positioned within the interior defined by the body and the cap; and an actuator having a first end and a second end, wherein the second end is in contact with the contact spring.

The system may further include an extension conductor coupled to the fastening region of the terminal and extending through the second aperture to an exterior of the housing, the extension conductor having a conductive socket configured to receive a conductive connector from a photovoltaic module.

The lid may be hingedly coupled to the housing.

The cap may further include a recess, and the actuator may further include a protrusion configured to physically engage the recess in a holding position and physically disengage the recess in a receiving position.

When the actuator is in the holding position, the actuator may apply a force on the contact spring so that the contact spring pivots about the pivot pin toward the contact region of the terminal.

The body may further include (i) a cap protrusion configured to physically engage with a cap recess in the cap and (ii) a housing protrusion configured to physically engage with a mounting recess in the housing.

The contact spring may include a prong that engages a conductor inserted into the body of the pass-through connector when the actuator is in a holding position and applying a force onto an end of the contact spring opposite the prong.

The actuator may be configured to have bimodal stability with a first stable position in a receiving position and a second stable position in a holding position.

The housing and lid may have a height of less than 22 millimeters when coupled together.

The terminal may further include at least one wing at the fastening region, wherein the at least one wing is configured to couple to a conductor positioned proximate to the fastening region.

The terminal may further include a locating region positioned between the cap and the body, wherein the locating region includes a first bend positioned proximate a wall of the body.

The cap may further include a first indication and the actuator includes a second indication a distance from the first indication, wherein the distance is 20-25 millimeters.

The actuator may further include a fulcrum and a spring stop at the second end, wherein the spring stop and the fulcrum form a fork in the second end.

In another implementation, the techniques described herein relate to a method that may include: inserting a conductor into an enclosure, the enclosure including: a housing defining a first aperture and a second aperture, wherein the conductor is inserted into the first aperture; a lid removably coupled to the housing; and a pass-through connector coupled to an interior surface of the enclosure, the pass-through connector including: a body having an interior curved edge; a cap coupled to the body and defining an interior between the body and the cap, the cap including a pivot pin, wherein the pivot pin and the interior curved edge define a channel in the interior; a contact spring positioned in part within the channel; a terminal having a fastening region and a contact region, wherein the fastening region is positioned exterior to the interior defined by the body and the cap, and wherein the contact region is positioned within the interior defined by the body and the cap; and an actuator having a first end and a second end, wherein the second end is in contact with the contact spring; inserting the conductor into the pass-through connector; and actuating the actuator to apply a force to the contact spring to engage the conductor.

### BRIEF DESCRIPTION OF THE DRAWINGS

Non-limiting embodiments of the present disclosure are described by way of example with reference to the accompanying figures, which are schematic and are not intended to be drawn to scale. Unless indicated as representing the background art, the figures represent aspects of the disclosure.
**FIG. 1** illustrates a photovoltaic system, according to an embodiment.
**FIG. 2** is a perspective top view of an enclosure designed for transitioning between different electrical conductors, according to an embodiment.
**FIG. 3** is a perspective bottom view of an enclosure, according to an embodiment.
**FIG. 4** is a perspective view of an enclosure, according to an embodiment.
**FIG. 5** is a perspective top view of an interior of an enclosure, according to an embodiment.
**FIG. 6** is a perspective view of a pass-through connector in one of multiple bimodal stable positions, according to an embodiment.
**FIG. 7** is a perspective view of a pass-through connector in one of multiple bimodal stable positions, according to an embodiment.
**FIG. 8** is a perspective view of a pass-through connector in one of multiple bimodal stable positions, according to an embodiment.
**FIG. 9** is an assembly view of a pass-through connector, according to an embodiment.
**FIG. 10** is a top view of a pass-through connector, according to an embodiment.
**FIG. 11** is a bottom view of a pass-through connector, according to an embodiment.
**FIG. 12** is a side view of a pass-through connector, according to an embodiment.
**FIG. 13** is a front view of a pass-through connector in the receiving state, according to an embodiment.
**FIG. 14** is a section view of a pass-through connector, according to an embodiment.
**FIG. 15** is a section view of a pass-through connector, according to an embodiment.
**FIG. 16** is a flowchart of an example method for installing and operating an enclosure as described herein.

### DETAILED DESCRIPTION

Reference will now be made to some embodiments illustrated in the drawings, and specific language will be used here to describe the same. It will nevertheless be understood that no limitation of the scope of the embodiments of the methods and systems described herein is thereby intended. Alterations and further modifications of the features illustrated here, and additional applications of the principles of the embodiments of the methods and systems described herein, as illustrated here, which would occur to a person skilled in the relevant art and having possession of this disclosure, are to be considered within the scope of the embodiments, methods, and/or systems described herein.

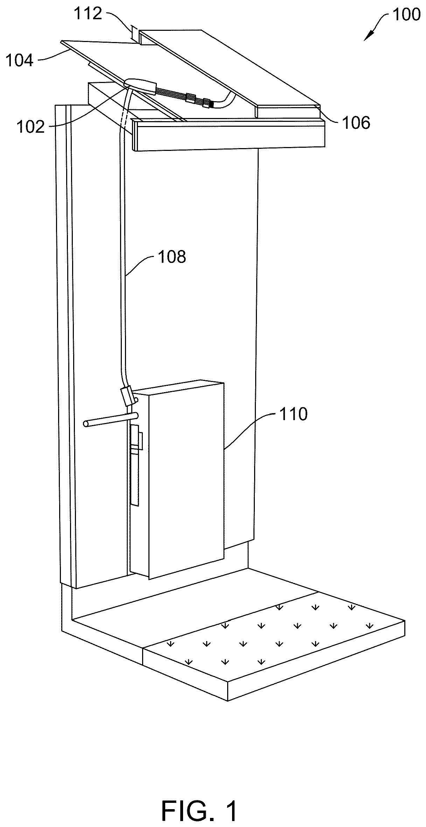

**FIG. 1** illustrates a portion of a photovoltaic system **100.** The photovoltaic system **100** may comprise one or more solar modules, tiles, or panels (shown as a photovoltaic module **106)** configured to capture solar radiation and convert it into electrical power. As an example, the photovoltaic system **100** could incorporate rigid framed solar panels for pitched-roof applications, flexible thin-film modules for curved or lightweight installations, or building-integrated photovoltaics that aesthetically blend into roofing materials.

Within the photovoltaic system **100,** an enclosure **102** is provided. The enclosure **102** may be configured to house and protect electrical conductors used for transitioning between photovoltaic wiring from the photovoltaic module **106** and thermoplastic heat and water resistant (THWN) wiring (shown as conductor **108).** The enclosure **102** could be fabricated from UV-stabilized plastic, powder-coated aluminum, or stainless steel, depending on environmental requirements. As described further herein, the enclosure **102** may feature additional gaskets or seals to achieve enhanced ingress protection ratings (e.g., IP67).

The enclosure **102** is mounted on a mounting surface **104.** The mounting surface **104** may be configured to provide mechanical support and proper positioning for the enclosure **102.** This mounting surface **104** could be a roof, deck, a metal racking system, or a prefabricated structural frame, each chosen to meet local code requirements and accommodate varying roof slopes or building styles. An alternative mounting method may involve ballasted systems or integrated attachment points designed specifically for solar installations.

Positioned proximate to the enclosure **102** is the photovoltaic module **106.** The photovoltaic module **106** may be configured to generate electrical power from solar energy and could be any of a monocrystalline, polycrystalline, or thin-film type, depending on efficiency and aesthetic needs. In certain embodiments, the photovoltaic module **106** might be coupled with microinverters or power optimizers to optimize power generation and system monitoring.

The enclosure **102** includes one or more electrical connections (described in further detail herein) with one or more conductors, shown for example, as conductor **108.** The conductors, such as the conductor **108,** may be configured to route electrical current from the enclosure **102** toward a power load **110.**

The conductor **108** may be 10 AWG THWN wire, bundled MC4 extension leads, or multi-strand cables with different gauge sizes. The power load **110** is positioned to receive and process the current from the conductor **108.** This power load **110** may be an inverter, battery energy storage system, or electrical distribution panel, configured for commercial or residential use. In an alternative embodiment, the power load **110** could be part of a hybrid energy system that manages both solar input and grid interaction, supporting backup power or load shifting.

In at least one embodiment, the enclosure **102** has a height less than a distance **112,** which extends from the mounting surface **104** to the photovoltaic module **106,** thus allowing installation of the enclosure **102** between the photovoltaic module **106** and the mounting surface **104.** The distance **112** could be sized to allow for airflow, compliance with fire setbacks, or maintenance access. In some embodiments, the distance **112** is defined by mounting brackets of the photovoltaic system **100** to which the photovoltaic module **106** is installed. The distance **112** may be 22 millimeters. While the distance **112** is described as 22 millimeters, it should be understood that the distance **112** may be more than 22 millimeters or less than 22 millimeters. For example, the distance may be 20-25 millimeters. Thus, the enclosure **102** may have a height less than 22 millimeters so as to allow the installation of the enclosure **102** between the mounting surface **104** (e.g., the roof) and a bottom surface of the photovoltaic module **106.**

In like manner, the individual components of the system within the enclosure **102** may have a height of less than 22 millimeters (e.g., a pass-through connector, as described further herein), thus allowing the individual components of the system to be positioned within the enclosure **102** while still maintaining a height of less than 22 millimeters. In some embodiments, the enclosure **102** has a height of less than 22 millimeters when a housing and a lid are coupled together.

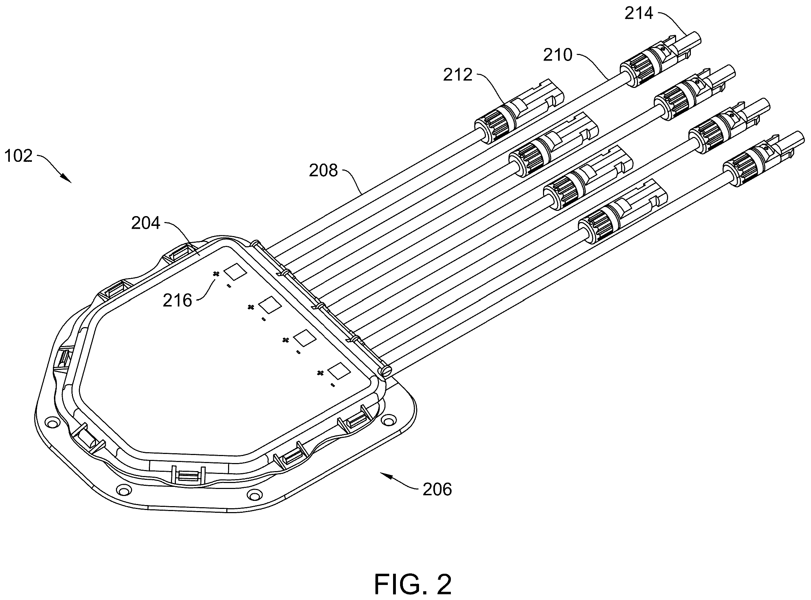

**FIG. 2** illustrates a perspective top view of the enclosure **102** designed for transitioning between different electrical conductors, by way of example, in the photovoltaic system **100** of **FIG. 1****.** In some embodiments, the enclosure **102** is configured to provide a transition from electrical conductors of a photovoltaic module (e.g., the photovoltaic module **106** of **FIG. 1****)** and a THWN wire (e.g., the conductor **108** of **FIG. 1****)** that is electrically coupled to a power load (e.g., the power load **110** of **FIG. 1****).**

The enclosure **102** includes a body, shown as body **206.** The body **206** may be configured to house one or more components of the enclosure **102** or photovoltaic system **100** (e.g., a pass-through connector, a wire, etc.). The body **206** may be formed from a durable material such as UV-stabilized polymer, aluminum, or stainless steel to withstand environmental exposure and mechanical stresses. The body **206** defines an internal cavity configured to house and align housed components, such as the pass-through connector (described further herein) and other internal components. In certain embodiments, the body **206** incorporates integral partitions or mounting structures (such as partitions) that help position, separate, and/or secure conductors (e.g., the pass-through connectors), while also providing pathways for airflow or cable management. As an alternative, the body **206** may include modular inserts or removable panels for customization, allowing installers to adapt the enclosure **102** to various wire gauges or connection types.

The enclosure may include a lid **204.** The lid **204** is configured to protect internal components from environmental factors, such as moisture, debris, and ultraviolet exposure, and may provide a secure, sealed interface when mated with the body **206** (as described herein). In certain embodiments, the lid **204** can be hinged or snap-fitted to allow convenient access to the interior for installation, inspection, and maintenance. The lid **204** may also be coupled to the body **206** in one or more other methods, such as by one or more fasteners, adhesives, slots, slides, etc. The enclosure **102** may also include one or more gaskets or sealing elements positioned between the lid **204** and the body **206** for ingress protection (e.g., an ingress protection of IP67). In some embodiments, the lid **204** incorporates a transparent or tinted panel to enable visual inspection of internal conductors without the need for removal, thereby streamlining routine checks in rooftop.

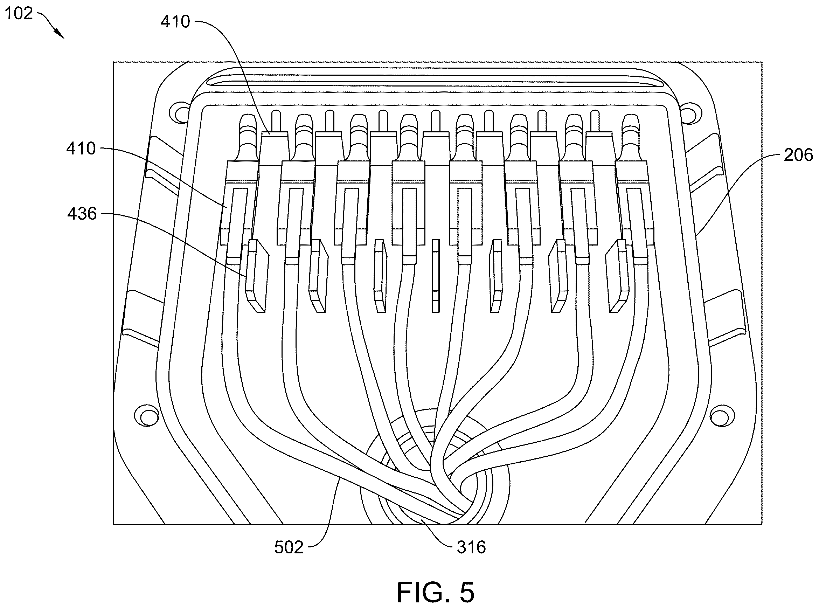

The enclosure **102** may include and/or be coupled to one or more extension conductors, shown as extension conductor **208, 210.** The extension conductor **208** is configured to provide an electrical pathway from the enclosure's internal pass-through components to external wiring or devices (e.g., the photovoltaic module **106** of **FIG. 1****).** In certain embodiments, the extension conductor **208** terminates in a plug or socket designed to couple with a photovoltaic connector to provide an efficient, tool-free integration into the photovoltaic system **100** of **FIG. 1****.** The extension conductor **208** may be coupled (e.g., crimped, soldered, plugged, hardwired, etc.) to the enclosure **102** at a pass-through connector (e.g., as shown in **FIG. 5****)** at a first end of the extension conductor **208.** The extension conductor **208** may have a second end opposite the first end. The extension conductor **208** may terminate in a conductive socket **212** at the second end.

The conductive socket **212** is configured to receive a corresponding conductive connector (e.g., a plug), thereby facilitating a secure, repeatable, and/or reliable junction between the extension conductor **208** and another component of the photovoltaic system **100.** In some embodiments, the conductive connector is electrically coupled to a photovoltaic cell or photovoltaic module (e.g., the photovoltaic module **106).** In certain embodiments, the conductive socket **212** may be, in at least one example, an MC4-compatible conductive connector or a similar standardized interface used in photovoltaic installations. The conductive socket **212** can be designed to provide environmental sealing with one or more gaskets or weatherproofing chemicals (e.g., dielectric grease), thereby preventing moisture or debris ingress while maintaining a stable electrical contact. The extension conductor **208** may be adapted to terminate in different types of conductive connectors or wire harnesses, allowing the enclosure to accommodate multiple installation scenarios. The extension conductor **208** and/or the conductive socket **212** may be configured to transmit a polarity of electricity, such as a positive or negative voltage. This polarity may be indicated by one or more markings/indications, such as indicator **216.** The indicator **216** may be a graphical and/or textual indicator of the polarity to which the extension conductor **208** is configured to transmit. By way of example, the indicator **216** is shown in **FIG. 2** as a "+", indicating to an installer that the extension conductor **208** is to be electrically coupled to a positive polarity.

The extension conductor **210** of **FIG. 2** may be substantially similar to the extension conductor **208.** In some embodiments, the extension conductor **208** includes a conductive socket **212** at the second end while the extension conductor **210** includes a plug **214** at the second end of the extension conductor **210.** In this way, a mixing of polarities from an electrical source is avoided. The plug **214** may be configured to be inserted into, or otherwise coupled with, a conductive connector, such as a socket that is coupled to a photovoltaic cell. The conductive connector may be a socket, plug, or other compatible connector with an electrically conductive core.

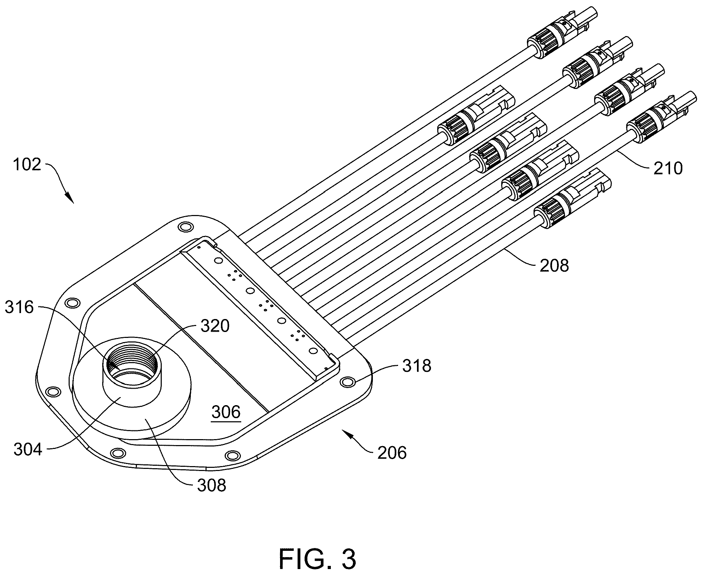

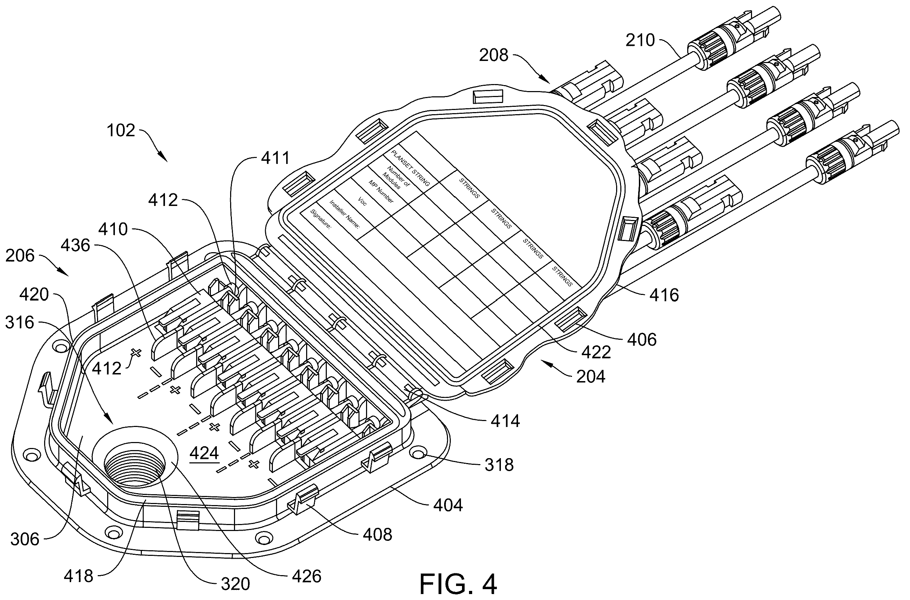

The body **206** may define one or more apertures for routing conductors, such as aperture **316** (as shown in **FIG. 3****)** and aperture **412** (as shown in **FIG. 4****).** Referring to **FIG. 3****,** the aperture **316** can be configured to receive an incoming conductor (for example, THWN wire), while the aperture **412** of **FIG. 4** can be configured to route the extension conductor **208** to an exterior of the housing.

**FIG. 3** illustrates a perspective bottom view of the enclosure **102,** according to an embodiment. As shown in **FIG. 3****,** the body **206** may include a drop-down **304.** The drop-down **304** is configured to extend below a base surface **306** of the body **206.** When mounted to a support surface, such as a roof, the drop-down **304** extends through an opening in the roof so as to allow electrical conductors electrically coupled to the enclosure **102** to extend into an area (e.g., an attic, eave, raceway, etc.) below the roof. In such a manner, the enclosure **102** penetrates the roof. The enclosure **102** may include one or more gaskets and/or sealants (shown as sealing member **308)** to prevent penetration of water or debris through the roof. The member **308** may be a gasket, sealant, and/or other sealing member to create a weather/waterproof seal between the base surface **306** and the mounting surface (e.g., the roof). In one embodiment, the member **308** is an EPDM foam that surrounds the drop-down **304** and creates a seal between the enclosure **102** and the roof.

The body **206** defines an aperture (shown as aperture **316)** through a base surface **306** of the body **206** at the interface between the drop-down **304** and the base surface **306.** For example, the base surface **306** may define a circular opening in the base surface **306** of the body **206** that provides access to an interior of the body **206.** One or more conductors may be routed through the aperture **316** into the interior of the body **206.** In some embodiments, the enclosure **102** does not include a drop-down **304.** In such embodiments, the enclosure **102** may include an aperture through a side wall of the enclosure **102,** which may allow the enclosure **102** to be mounted to the mounting surface (e.g., the roof) without routing electrical conductors through the roof, thereby reducing penetrations into the mounting surface.

The drop-down **304** may include threads **320.** The threads **320** may be integral (e.g., formed into) to the drop-down **304.** The threads **320** may be formed into an interior of the drop-down **304** (as shown in **FIG. 3****)** or on an exterior surface of the drop-down **304.** The threads **320** may be configured to couple the enclosure **102** to another component of the photovoltaic system **100** of **FIG. 1****.** Exemplary components may include, but are not limited to or by, a mounting flange that may be used to fasten the enclosure **102** to the mounting surface. In some embodiments, the threads **320** are threadedly coupled to a conduit for routing electrical conductors.

The enclosure **102** may, in some embodiments, include one or more mounting apertures, shown as mounting aperture **318.** The mounting aperture **318** may be configured to accept fasteners such as screws, bolts, or rivets for securely attaching the enclosure **102** to a structural surface or a separate mounting bracket. In certain embodiments, the mounting aperture **318** can include an integrated metal or plastic insert for added reinforcement. As an alternative, the mounting aperture **318** could be dimensioned or shaped to accommodate specialized fittings or grommets. Additionally or alternatively, the enclosure **102** may be coupled to the mounting surface with adhesives, such as construction adhesive.

Turning to **FIG. 4****,** a perspective view of the enclosure **102** is shown with the lid **204** in an open position relative to the body **206,** thus providing access to an interior of the enclosure **102** defined by the body **206** and/or the lid **204.** The lid **204** may be coupled to the body **206** by one or more fastening features such as, but not limited to, a coupling member **414** and/or a connector **408.** As shown in **FIG. 4****,** the coupling member **414** may be a hinge that hingedly couples the lid **204** to the body **206.** In some embodiments, the lid **204** may be removably coupled to the body **206.** In being removably coupled, the lid **204** may be completely removed from the body **206,** such as by removing a hinge pin.

Additionally or alternatively to the hinged coupling, the enclosure **102** may include a connector **408** on the body **206** to removably couple the body **206** to the lid **204.** The connector **408** may extend from a lateral wall of the body **206** and include a ramped feature to engage a connector opening **406** of the lid **204.** The lid **204** defines the connector opening **406** which defines an opening in at least a portion of the lid **204** (e.g., an outer lip **416)** of the lid **204.** The connector **408** may be configured to be inserted into the connector opening **406** and snap into a mechanical coupling that seals the lid **204** to the body **206.** The lateral wall **420** may extend orthogonally or at an angle from the base surface **306.** The lateral wall **420** may have a sealant **418** (e.g., a gasket, rubber, etc.) on a top surface of the lateral wall **420** that is configured to be positioned proximate to, and form a seal with, the lid **204.** In some embodiments, the lid **204** may have an opposing sealant **422** that forms the seal with the sealant **418.**

In some embodiments, the connector **408** is configured to be removed from the connector opening **406,** thus unsealing the lid **204** from the body **206.** The enclosure **102** may include a plurality of connectors similar or distinct from the connector **408** along the lateral walls of the body **206** and/or a land **404** of the body **206.** Likewise, the lid **204** may include one or more connector openings similar to the connector opening **406** around the lip of the lid **204.**

An interior surface **424** of the base surface **306** may include a counterbore, shown as counterbore **426,** around the aperture **316.** In embodiments in which the drop-down **304** is a separate part from the body **206** and mechanically coupled to the body **206,** the counterbore **426** may be configured to receive or seat a conduit fitting or locking nut, to allow that hardware to sit flush or below the surrounding surface for a secure and unobtrusive fastening. As an alternative, the counterbore **426** could be adapted to accommodate specialty gaskets or seals for enhanced ingress protection. In some embodiments, the counterbore **426** may be configured to provide a smooth surface for the conductors to ingress and egress the body **206,** protecting the conductors from sharp edges that may fray and/or otherwise damage the conductors.

The body **206** may include an opening in the lateral wall **420,** shown as aperture **412.** The aperture **412** may be configured to allow conductors or connectors to pass laterally into or out of the enclosure **102,** providing a routing path for both incoming and/or outgoing cables. In one embodiment, the extension conductor **208** may pass through the aperture **412** and connect to internal components or other system elements without requiring significant reconfiguration of the enclosure **102.** For example, the extension conductor **208** may pass through the aperture **412** to couple with a pass-through connector (shown as the pass-through connector **410)** at the first end of the extension conductor **208.** In certain embodiments, the aperture **412** may accommodate a grommet, compression fitting, or other sealing device that ensures a protective interface around the extension conductor **208,** thereby providing a weather/waterproof seal into the interior of the body **206** at the aperture **412.** In at least one embodiment, the aperture **412** is sized to receive specialized adapters or bulkhead connectors, to facilitate removal/installation of the extension conductor **208** from/to the body **206.**

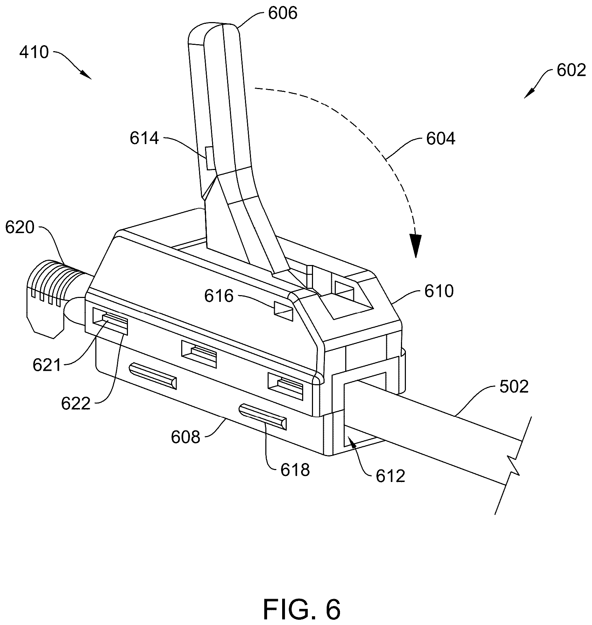

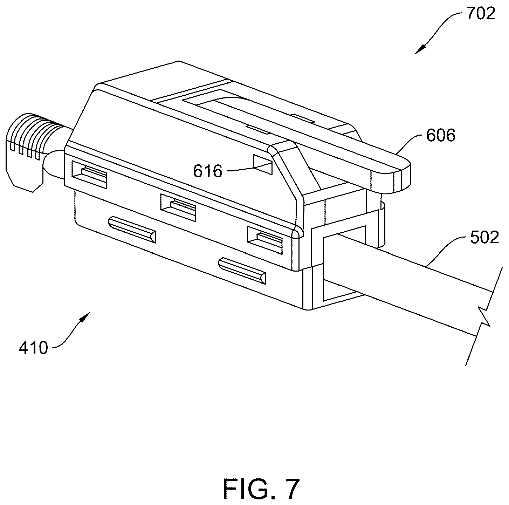

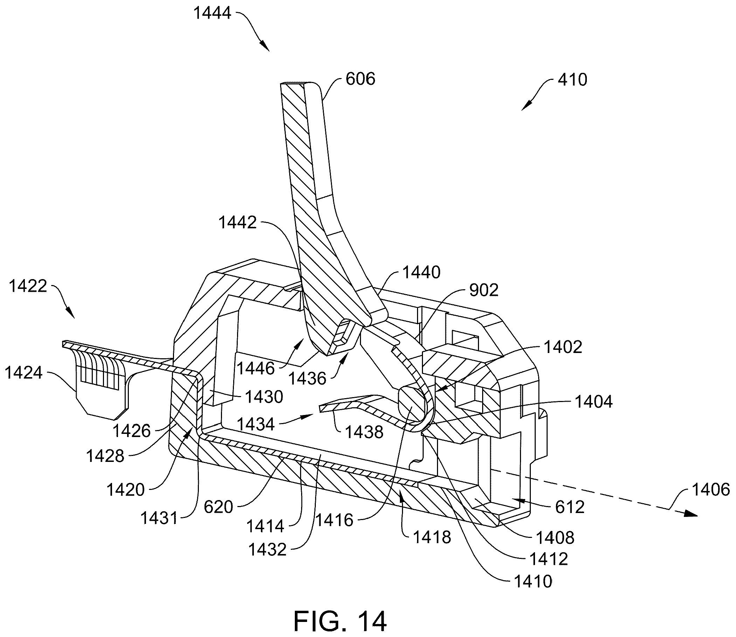

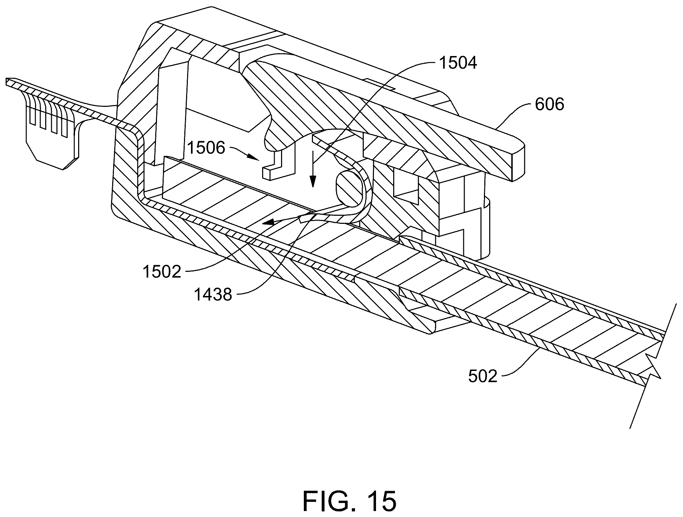

As shown in **FIG. 4****,** the enclosure **102** may include (or otherwise be coupled to) an inline conductor, shown as the pass-through connector **410.** The enclosure **102** may house one or more pass-through connectors, shown as the pass-through connector **410.** Each pass-through connector **410** can be configured to provide a secure and reliable electrically conductive interface for transitioning electrical power from an extension conductor (e.g., the extension conductor **208)** to an outgoing conductor (e.g., the conductor **502** of **FIG. 5****)** opposite the extension conductor within a compact footprint. As shown in **FIGS. 6-15****,** and described in greater detail herein, the pass-through connector **410** includes a body, a cap, a contact spring, and an actuator mechanism in a single assembly. This reduces the need for bulky external junctions and simplifies installation of the enclosure **102.** The pass-through connector **410** may have a height of less than 22 millimeters. An interior channel formed by the body and cap accommodates the contact spring which may be actuated by the actuator to apply a force against an inserted conductor (e.g., the conductor **502),** which facilitates both electrical continuity and mechanical retention. The configuration of the actuator in conjunction with the contact spring provides for a system with bimodal stability. In other words, the actuator may have two configurations in which it is stable (e.g., bimodal stability). The first stable configuration may be a receiving state (e.g., the contact spring is not engaged, as shown in **FIGS. 6** and **14****).** The second stable configuration may be a holding state (e.g., the contact spring is engaged, as shown in **FIGS. 7** and **15****).**

The pass-through connector **410,** with its actuated contact spring, facilitates adaptability to various wire gauges (e.g., 10, 12, 14, 16, 18, 20, 22 AWG) and/or connection types (e.g., stranded, solid, etc.). Moreover, the body and cap can be formed from materials suited for outdoor use, such as UV-stabilized polymers or corrosion-resistant alloys.

The enclosure **102** may include one or more partitions, shown as partition **436, 411.** The partition **436** is configured to physically separate and organize conductors within the enclosure **102,** ensuring that wires remain routed and properly isolated from one another. The partition **436** extends from the interior surface **424** and is positioned between pass-through connectors (e.g., the pass-through connector **410).** In certain embodiments, the partition **436** may be integrally molded with the enclosure housing or removably attached using fasteners, thereby facilitating reconfiguration or adaptation of the interior layout based on varying conductor types or system requirements. As an alternative, the partition **436** could incorporate labeling, channels, and/or guides.

**FIG. 5** is a perspective top view of the interior of the body **206** with a plurality of conductors (shown as conductor **502)** entering the interior of the body **206** through the aperture **316.** The conductor **502** is routed to the pass-through connector **410** and shown inserted therein.

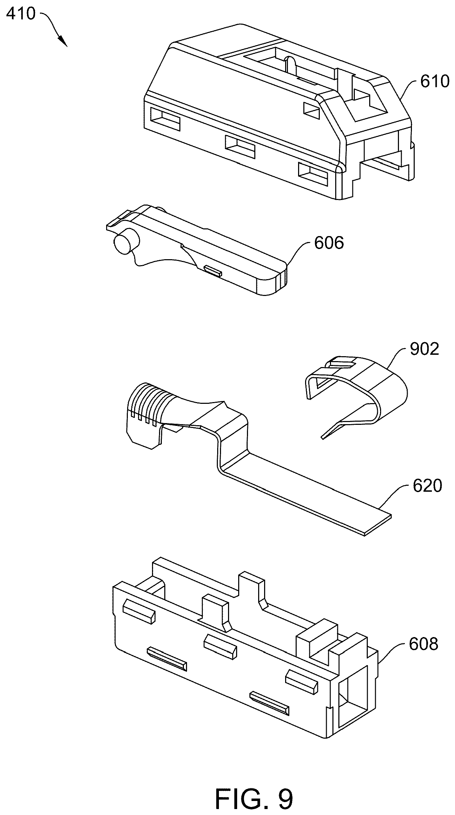

**FIG. 6** is a perspective view of the pass-through connector **410** in one of the bimodal stable positions (e.g., the receiving state). The pass-through connector **410** may include a body **608,** a terminal **620,** an actuator **606,** a cap **610,** and/or a contact spring (shown as contact spring **902** in **FIG. 9****).**

The body **608** is configured to a provide structural framework of the pass-through connector **410,** defining at least a portion of an interior of the pass-through connector **410.** The interior of the pass-through connector **410** may include a channel (e.g., a channel **1402** as shown **FIG. 14****)** for a contact spring (e.g., a contact spring **902,** as shown in **FIGS. 9** and **14****),** thereby facilitating proper alignment of the contact spring with a cap and actuator. With features such as protrusions, recesses, or reinforcement ribs (as described herein), the body **608** supports a mechanical engagement with one or more conductors.

In some embodiments, the body **608** is molded or cast from materials such as glass-filled nylon and/or another polymer with high temperature and UV resistance. The body **608** may also include one or more protrusions or recesses to align with a cap or actuator, ensuring proper assembly. Additionally or alternatively, the body **608** is formed with integral reinforcement ribs (either on the interior or exterior of the body **608)** to enhance rigidity and withstand repeated actuator cycles.

The body **608** may include an opening **612.** This opening **612** is configured to provide an aperture through which a conductor (e.g., the conductor **502** of **FIG. 5****)** may enter into the interior of the pass-through connector **410.** The opening **612** may be of any suitable shape including, but not limited to, circle, square, rectangle, or any other polygon. As shown in **FIG. 14****,** the opening **612** may include a ramped section **1408.** The ramped section **1408** may extend around one or more sides of the opening **612.** As shown in **FIG. 14****,** the ramped section **1408** may be inset from the opening **612.** The ramped section **1408** may be configured to facilitate insertion of the conductor **502** into the interior of the pass-through connector **410.** The ramped section **1408** may reduce the size of the opening **612** into the interior of the pass-through connector **410** to provide a more secure holding of the conductor **502** in the holding state, such as shown in **FIG. 7****.** As shown in **FIG. 14****,** the body **608** may have an axis **1406** extending through the center of the opening **612.** The conductor **502** may be inserted into the interior of the body **608** along the axis **1406.**

The body **608** may include an interior curved edge **1404,** as shown in **FIG. 14****.** The interior curved edge **1404** may be configured to define at least a portion of a channel **1402** through which the contact spring **902** extends during operation. The interior curved edge **1404** may define a portion of the interior surface of the body **608** and extend into the interior of the pass-through connector **410.** The interior curved edge may curve into the interior of the pass-through connector **410,** curving away from the opening **612** toward an apex **1412.** The apex **1412** extends into the interior of the pass-through connector **410** away from the opening **612.**

The interior curved edge **1404** cooperates with a pivot pin (e.g., a pivot pin 1416, as described further herein) to define the channel **1402** that houses the contact spring **902.** The channel **1402** has a curvature defined by a surface of the pivot pin **1416** and the interior curved edge **1404** which facilitates positioning of the contact spring **902** during a holding state to provide a retention force or compression angle.

The pass-through connector **410** may include a raised stop **1410.** The raised stop **1410** may be configured as a stop against which the terminal **620** is abutted. The raised stop **1410** provides a positive stop to which the terminal **620** may be positioned for alignment during assembly and operation. The raised stop **1410** protrudes from the interior surface of the body **608.** In some embodiments, the ramped section **1408** extends to the raised stop **1410,** as shown in **FIG. 14****.** The raised stop **1410** may be raised from a surface **1414.** The surface **1414** provides a surface upon which a contact region **1418** of the terminal is positioned against.

The pass-through connector **410** may include the terminal **620.** The terminal **620** may be configured to provide an electrical coupling between two or more electrical conductors, such as, but not limited to, the conductor **502** and the extension conductor **208.** The terminal **620** may be manufactured from one or more electrically conductive materials (e.g., copper, copper-alloy, aluminum, nickel-plated steel, or silver-plated brass). The terminal **620** may comprise a contact region **1418,** a locating region **1420,** and/or a fastening region **1422,** arranged so that the fastening region **1422** remains exterior to the interior defined by the body **608** and the contact region **1418** is positioned within the interior so that it can interface with an inserted conductor, such as the conductor **502.** In some embodiments, the fastening region **1422** is opposite the contact region **1418** of the terminal **620.** In some embodiments, the fastening region **1422** includes one or more wings, such as wing **1424** for crimping or otherwise coupling to an electrical conductor (e.g., the first end of the extension conductor **208).** In some embodiments, the fastening region **1422** from the pass-through connector **410** opposite the opening **612.**

The fastening region **1422** may be substantially located along a first plane, the locating region **1420** may extend from the fastening region at a bend **1426** with an angle (e.g., 45°, 90°, 135°). The locating region **1420** may be positioned between a surface (e.g., an interior surface or exterior surface) of a wall **1428** of the body **608** and a surface of a wall **1430** of the cap **610.** In this way, the locating region **1420** of the terminal **620** is constrained in position between the cap **610** and the body **608,** thereby holding the terminal **620** securely in place. The contact region **1418** extends from the locating region **1420** at a bend **1431.** In other words, the locating region **1420** may extend between the bend **1426** and the bend **1431**

The terminal **620** may be in contact with the interior surface of the body **608** along at least a portion of the locating region **1420** (including the bend **1431** and/or the bend **1426)** and/or the contact region **1418.** The contact region **1418** may be in contact with the surface **1414,** and the contact region **1418** may have a thickness such that the raised stop **1410** and the contact surface **1432** of the contact region **1418** are coplanar, thereby facilitating insertion of the conductor **502** into the pass-through connector **410** and providing a secure contact area for an unsheathed portion of the conductor **502** with the contact spring **902.** The contact surface **1432** is made of a conductive material so that the unsheathed portion of the conductor **502** may be electrically coupled to the contact region **1418.**

The extension conductor **208** may have an electrically conductive core that is coupled to the fastening region **1422** of the terminal **620.** For example, the extension conductor **208** may be stripped of its insulation at the second end and positioned proximate (e.g., in contact with) the fastening region **1422** of the terminal **620.** In a crimping approach, the fastening region **1422** can include a cylindrical barrel or similarly shaped section (e.g., having one or more wings, such as the wing **1424)** which is mechanically deformed (e.g., via compression tools or automated crimping equipment) to tightly envelop and hold the bare conductor core of the extension conductor **208.** In some embodiments, such as shown in the figures, the terminal **620** includes two wings which may be deformed in a crimping fashion around the conductive core of the extension conductor **208** to electrically and physically couple the extension conductor **208** proximate to the terminal **620.** Though the wing **1424** is shown in **FIG. 14****,** it is understood that the fastening region **1422** may have one or more members of shapes, and/or techniques other than a wing to securely fasten the extension conductor **208** proximate to the terminal **620.** For example, the fastening region **1422** may integrate different coupling methods such as a set screw, clamp, solder joint, or ultrasonic weld to mechanically and electrically couple the extension conductor **208** proximate to the fastening region **1422.**

As shown in **FIG. 4****,** the extension conductor **208** extends from the fastening region **1422,** through the aperture **412,** to an exterior of the enclosure **102.** In some embodiments, the extension conductor **208** is coupled to the pass-through connector **410** prior to installation of the pass-through connector **410** to the body **206** of the enclosure **102.** For example, the extension conductor **208** may be coupled to the pass-through connector **410** prior to coupling the pass-through connector **410** to the body **206,** such as by a snap fit, fastening, or other coupling technique.

The body **608** of the pass-through connector **410** may have one or more protrusions extending from the walls of the body **608** for physically coupling the body **608** to one or more components. For example, as shown in **FIG. 6****,** the body **608** may include one or more housing protrusions, shown as housing protrusion **618,** that are configured to protrude into, and physically engage with, one or more recesses in the enclosure **102,** such as a mounting recess. The housing protrusion **618** may be formed as a molded projection extending from the body **608** with a size and shape to physically align with the corresponding mounting recess in the body **206.** In assembly, the housing protrusion **618** is positioned over the mounting recess and pressed into place, causing the outer edges of the housing protrusion **618** to flex slightly as they pass the mounting recess lip. Once fully inserted, the housing protrusion **618** snaps back to its original form from the flexed position, engaging with the mounting recess, and physically coupling the body **608** securely to the body **206.** In such manner, the physical engagement of the housing protrusion **618** in the mounting recess facilitates a removable fastening of the body **608** to the body **206.**

The body **608** may include a cap protrusion **621** for physically engaging the cap **610** through one or more cap recesses, such as the cap recess **622.** The cap protrusion **621** may be an integrally molded extension of the body **608** and configured to provide a mechanical connection between the body **608** and the cap **610.** The cap protrusion **621** may have a tapered or hook-like profile that allows it to flex slightly when inserted into the cap recess **622** in the cap **610.** As the cap protrusion **621** is pressed into place to physically engage with the cap recess **622,** its outer edges may temporarily deform to pass over the lip of the cap recess **622,** after which they return to their original shape, thereby physically engaging the cap **610** and coupling the body **608.** This snap-fit engagement allows the cap **610** to remain securely fastened to the body **608** while allowing for disassembly. In some embodiments, the cap protrusion **621** may include additional retention features, such as barbs or interlocking ridges, to enhance mechanical stability and prevent unintentionally disengaging from the cap recess **622.** In such manner, the physical engagement of the cap protrusion **621** in the cap recess facilitates a removable fastening of the body **608** to the cap **610.**

The cap **610** may form part of the pass-through connector **410** and define, in part, the interior of the pass-through connector **410.** The cap **610** may be coupled to the body **608** to form the partially enclosed interior of the pass-through connector **410.** The cap **610** can be configured to provide a stable pivot point-such as with a pivot pin **1416-and** to secure the contact spring **902** and other internal elements. In some implementations, the pivot pin **1416** of the cap **610** defines, in part, a recess or channel with the interior curved edge **1404** of the body **608** for the contact spring **902** to be located in operation. The cap **610** may be fastened to the body **608** via snap-fit features, a hinge mechanism, or threaded inserts, allowing the cap **610** to be removed or replaced during maintenance. In some embodiments, the cap **610** may have a transparent or windowed section for visual inspection of the conductor **502** when the conductor **502** is coupled to the pass-through connector **410.**

The cap **610** may include the pivot pin, shown as pivot pin **1416** in **FIG. 14****.** The pivot pin **1416** may extend from a first lateral wall to a second lateral wall, forming a boundary of the channel **1402** (the other boundary formed, at least in part, by the interior curved edge **1404)** of the body **608.** The pivot pin **1416** is configured to pivotally constrain the contact spring **902** within the pass-through connector **410** and support rotational movement of the contact spring **902** (e.g., act as a fulcrum for the contact spring **902)** which facilitates the application of a force (e.g., force **1502)** by the contact spring **902** on the conductor **502** (e.g., as shown in **FIGS. 7** and **15****).** The pivot pin **1416** helps maintain the position of the contact spring **902** when the actuator **606** applies a force (e.g., force **1504** of **FIG. 15****)** on the contact spring **902.** The opening **612** helps maintain the position of the contact spring **902** when the actuator disengages the contact spring **902.**

The pass-through connector **410** may include a contact spring **902.** The contact spring **902** may be positioned partly within the channel defined by the body **608** and pivot pin **1416,** biasing itself against a conductor when the actuator is in a holding position. This biasing action provides high pull-out resistance to keep the conductor secure. The contact spring **902** could be formed from stainless steel or another corrosion-resistant metal to preserve conductivity and mechanical performance. As an alternative, the contact spring **902** may have additional bends or prongs to enhance its grip on the conductor, or it could be surface-treated to reduce friction and wear.

The contact spring **902** may be made of a resilient metal alloy or other compliant mechanism. As shown in **FIG. 14****,** the contact spring **902** may have a first end **1434** and a second end **1436** opposite the first end **1434.** The contact spring **902** may have a prong **1438** at the first end **1434.** The prong **1438** of the contact spring **902** may be an extended portion of the spring configured to engage an inserted conductor (e.g., the conductor **502)** and maintain electrical contact with the conductor. As shown in **FIG. 15****,** the contact spring **902** may be positioned within the channel formed by the body **608** and cap **610,** such that when the conductor **502** is inserted into the pass-through connector **410,** the prong **1438** applies a biasing force (e.g., the force **1502)** against the conductor **502.** In some embodiments, and as shown in **FIG. 15****,** the prong **1438** physically engages with the conductor **502** when the actuator **606** is in a holding position (as described herein). The force **1502** may be generated by the natural elasticity of the contact spring **902,** which allows the prong **1438** to apply the force **1502** when engaged by the actuator **606** and pressing against a surface, thereby gripping the conductor **502** securely. The force **1502** may be generated by the contact spring **902** being resiliently deformed between the actuator **606** at the second end **1436** and the conductor **502** at the first end **1434.** The actuator **606** may apply a force **1504,** when in the holding state, to the second end **1436** of the contact spring **902.**

In some embodiments, the prong **1438** may include serrated edges, ridges, or a textured surface to enhance its gripping ability and improve conductivity by increasing the contact area with the conductor. As an alternative, the prong **1438** could be designed with a curved or angled profile to increase insertion forces and provide a self-aligning feature. The prong **1438** may be made of a material with high conductivity and mechanical resilience, such as stainless steel, phosphor bronze, or a copper alloy with a corrosion-resistant coating.

The pass-through connector **410** may include the actuator **606.** The actuator **606** may be a lever-like component that pivots or slides within or about the enclosure **102** to move between a receiving position (e.g., shown as receiving position **602** in **FIG. 6****)** and a holding position (e.g., shown as holding position **702** of **FIG. 7****).** The actuator **606** may include one or more protrusions, such as protrusion **614,** extending from an outer surface of the actuator **606.** The protrusion **614** of the actuator **606** is configured to engage a recess **616** in the cap **610** when the actuator **606** is moved into the holding position **702.** In this position, the protrusion **614** snaps or locks into the recess **616** (e.g., as described herein), preventing unwanted disengagement. When moving the actuator **606** back toward the receiving position, the protrusion **614** disengages from the recess **616,** allowing the actuator **606** to pivot or slide along a path **604,** thus disengaging the contact spring **902** and removing or reducing a force applied to the contact spring **902** (e.g., shown as force **1504** in **FIG. 15****),** thereby releasing the contact spring **902** and providing clearance for inserting or removing a conductor.

The actuator **606** includes a first end **1444** and a second end **1446** opposite the first end **1444.** The second end **1446** may be forked. The fork at the second end of the actuator **606** is formed by two prongs that extend away from the main actuator body, creating a generally U- or Y-shaped fork profile. As shown in **FIGS. 14-15****,** the first prong of the fork comprises a fulcrum **1440,** and the second prong of the fork comprises a spring stop **1442** opposite the fulcrum **1440.** The fulcrum **1440** is shaped to provide a bearing surface against the contact spring **902,** enabling a pivoting action that exerts a controlled force on the conductor when the actuator **606** is in the holding position **702.** In the holding position **702,** the fulcrum **1440** bears against the contact spring **902,** pressing it toward the conductor and applying the force **1504** (as shown in **FIG. 15****)** on the contact spring **902** so as to maintain a high pull-out force for the conductor in the holding position **702.** In some embodiments, the pull-out force may exceed 300 Newtons. In some embodiments, the fulcrum **1440** may have a slightly rounded or contoured edge, which reduces friction with the contact spring **902** and enhances the smoothness of the actuator's transition between receiving and holding positions.

When in the receiving position **602,** the spring stop **1442** retains the second end **1436** of the contact spring **902** in alignment, thus preventing undesired lateral or rotational displacement of the contact spring **902.** Together, these forks guide and limit the movement of the contact spring **902.** The actuator **606** travels along a path **604** between the receiving position **602-**where the contact spring is disengaged and the conductor can be inserted or removed with minimal force-and the holding position **702**-where the conductor **502** is secured to the contact region **1418** of the terminal **620** under compression from the contact spring **902,** thereby maintaining electrical continuity while retaining the conductor **502** within the pass-through connector **410.**

The spring stop **1442** is spaced from the fulcrum **1440** and may be oriented at an angle or offset to capture and restrain the second end **1436** of the contact spring **902** when in the receiving position **602.** This prevents the contact spring **902** from flexing laterally or shifting out of alignment. The geometry of the fork-in particular, the gap, angle, and length of each prong-is selected to accommodate the thickness of the contact spring **902** and to provide reliable engagement with the conductor without requiring excessive insertion or removal forces.

The actuator **606** is configured to have a bimodal stability, in which the actuator **606** may be in a first stable position (e.g., the receiving position **602)** or a second stable position (e.g., the holding position **702)** without requiring continuous external force. In the receiving position **602,** the actuator **606** is oriented so that there is minimal pressure on the contact spring **902,** thus disengaging the contact spring **902** and allowing an installer to insert or remove a conductor (e.g., the conductor **502).** In the holding position **702,** the actuator **606** moves to depress the contact spring **902** toward the contact region **1418** of the terminal **620** and press against the inserted conductor (e.g., the conductor **502),** thereby engaging the conductor **502** and maintaining a high pull-out force and reliable electrical contact.

The bimodal stability arises from the configuration of the forked nature of the second end **1446** of the actuator **606.** For example, the prongs of the second end **1446** (e.g., the fulcrum **1440** and/or the spring stop **1442)** may act as one or more cam surfaces that, when pressing against the contact spring **902,** effectively lock the actuator **606** into either of the stable positions. The actuator **606** may rotate (e.g., following the path **604)** such that the fulcrum **1440** cams the contact spring **902** into a locked stable position. In the receiving position **602,** the contact spring **902** presses against the spring stop **1442** and/or the fulcrum **1440** to lock the actuator **606** into a stable position. In some embodiments, the fulcrum **1440** and the spring stop **1442** form an angled notch, into which the second end **1436** of the actuator **606** is positioned in the receiving position **602.** As shown in **FIG. 15****,** when the actuator is rotated to the holding position **702,** the contact spring **902** presses against the fulcrum **1440.** In some embodiments, the contact spring **902** has an opening **1506** in the second end **1436.** The bimodal stability of the actuator **606** facilitates installation of the conductor **502** into the pass-through connector **410.** For example, when the pass-through connector **410** is the receiving position **602,** the installer is able to insert the conductor **502** one-handedly. Once inserted, the user may then actuate the actuator **606** to the holding position **702** with one hand, thereby locking the conductor **502** into place.

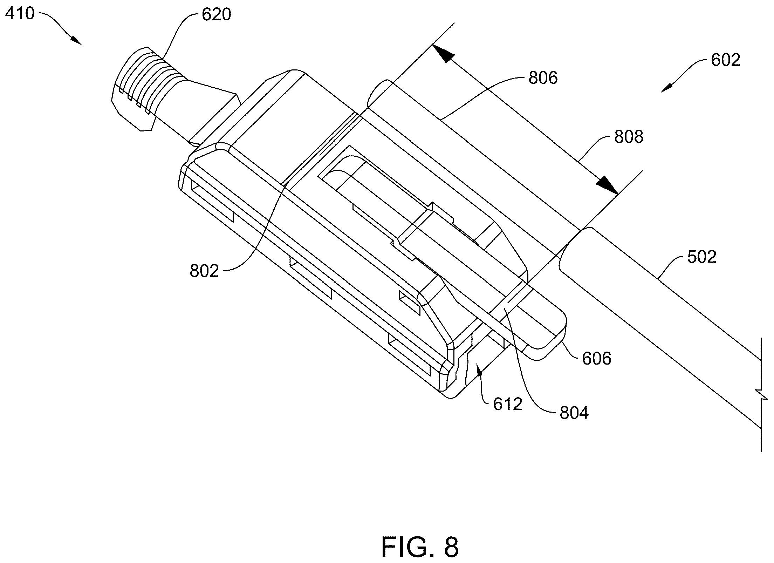

In addition to bimodal stability, the actuator **606** and/or the cap **610** may include one or more markings to indicate a distance **808** of conductor to unsheathe prior to insertion into the opening **612** of the pass-through connector **410.** For example, as shown in **FIG. 8****,** the cap **610** may include a first indicator **802** and a second indicator **804.** The distance **808** between these indicators may be 20-25 millimeters. In some embodiments, the distance is 22 millimeters. The pass-through connector **410** may be configured to receive 22 millimeters of the conductor **502** that is unsheathed into the pass-through connector **410.** As such, the installer may easily verify (e.g., visually) that an unsheathed portion **806** of the conductor **502** is substantially close to the distance **808** by positioning the unsheathed portion **806** proximate to the first indicator **802** and the second indicator **804.**

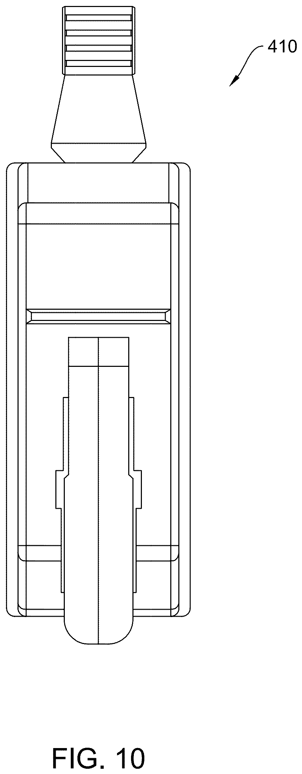

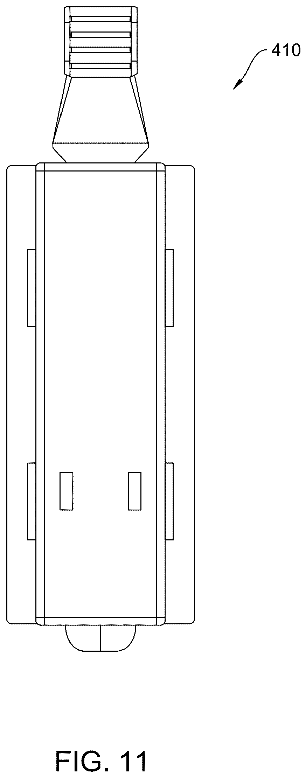

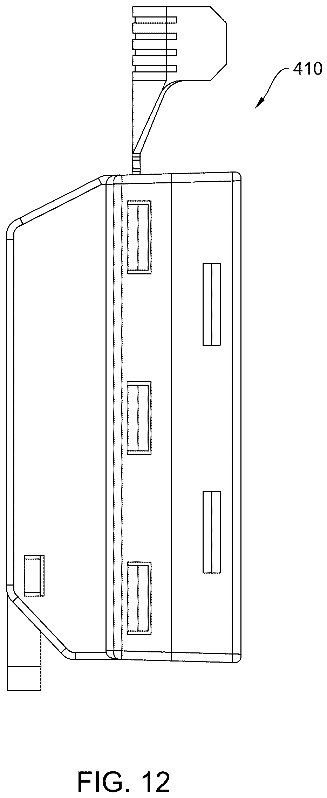

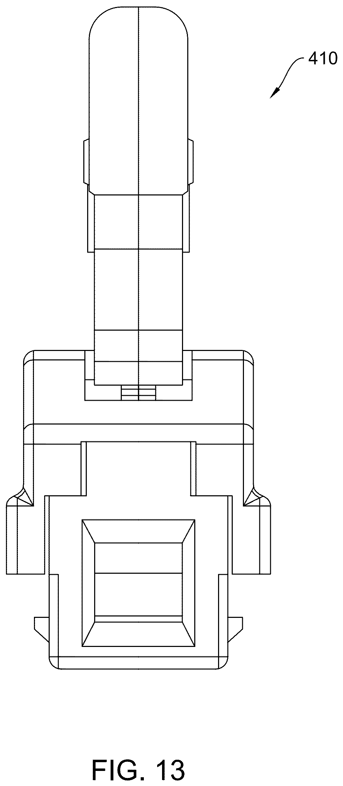

**FIG. 9** is an assembly view of the pass-through connector **410,** according to an embodiment. **FIG. 10** is a top view of the pass-through connector **410,** according to an embodiment. **FIG. 11** is a bottom view of the pass-through connector **410,** according to an embodiment. **FIG. 12** is a side view of the pass-through connector **410,** according to an embodiment. **FIG. 13** is a front view of the pass-through connector **410** in the receiving state, according to an embodiment.

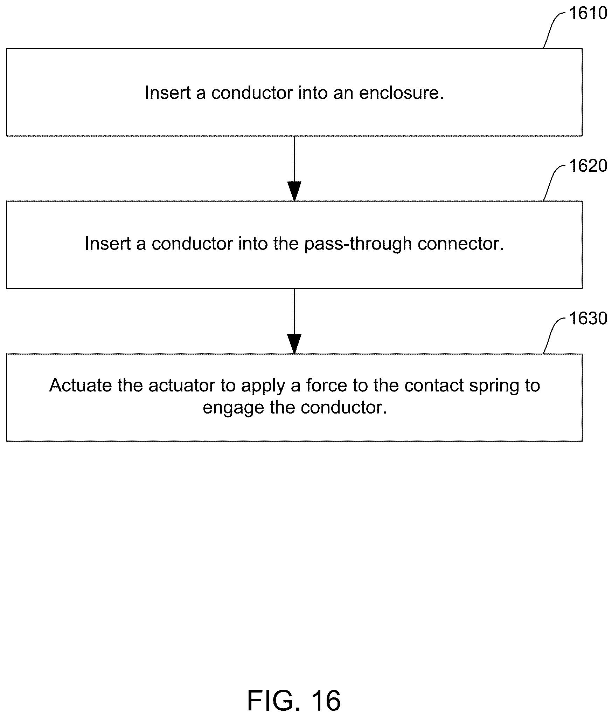

**FIG. 16** is a flowchart of an example method for installing and operating an enclosure as described herein. The method may include one or more steps, including step **1610, 1620,** and/or **1630.** Though the steps are shown in a particular order, it should be understood that the method **1600** may include fewer, more, or different steps than those shown and described herein. The order of step **1610, 1620, 1630** are for illustrative purposes only, and it should be understood that the method **1600** may be executed in any order without departing from the description herein.

At step **1610,** the conductor is inserted into an enclosure (e.g., the enclosure **102** as described herein) through an aperture in the housing of the enclosure. At step **1620,** the conductor is inserted into the pass-through connector (e.g., the pass-through connector **410** as described herein) through an opening in the pass-through connector. At step **1630,** the actuator **606** is actuated to apply a force to the contact spring to engage the conductor which has been fully inserted in the pass-through connector.

The method **1600** of installing the enclosure may include additional steps. For example, the method **1600** may include determining the desired location on the mounting surface and preparing any necessary fastener holes or conduit pathways. The enclosure is then positioned so that its drop-down is align with the incoming and outgoing wiring routes. Using screws, bolts, or other fasteners compatible with the mounting apertures, the enclosure is secured to the surface (e.g., the roof), ensuring a stable fit that meets local building or electrical codes. In some installations, the enclosure may be attached to a bracket or racking system before final placement, allowing the installer to pre-fit the enclosure at ground level for convenience. In some embodiments, a hole is placed in the roof through which the drop-down is placed.

Once the enclosure is firmly mounted, the lid is removed or hinged open to expose the interior. Any conductor to be passed through the enclosure (e.g., THWN wire or photovoltaic wiring) is stripped to the appropriate length and inserted into the pass-through connector. The installer then moves the actuator from the receiving position to the holding position, thereby pressing the contact spring against the conductor for a secure electrical and mechanical connection. Extension conductors, if present, are similarly routed through the enclosure and connected together with the fastening region of the terminal using crimping or other attachment methods. After confirming all conductors are properly seated and secured, the lid is closed, latched, or fastened, providing environmental protection for the internal components.

As utilized herein with respect to numerical ranges, the terms "approximately," "about," "substantially," and similar terms generally mean +/- 10% of the disclosed values, unless specified otherwise. As utilized herein with respect to structural features (e.g., to describe shape, size, orientation, direction, relative position, etc.), the terms "approximately," "about," "substantially," and similar terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the figures. It should be noted that the orientation of various elements may differ according to other exemplary embodiments, and that such variations are intended to be encompassed by the present disclosure.

## Claims

1. A system comprising:
an enclosure comprising:
a housing defining a first aperture and a second aperture; and
a lid removably coupled to the housing; and
a pass-through connector coupled to an interior surface of the enclosure, the pass-through connector comprising:
a body having an interior curved edge;
a cap coupled to the body and defining an interior between the body and the cap, the cap comprising a pivot pin, wherein the pivot pin and the interior curved edge define a channel in the interior;
a contact spring positioned in part within the channel;
a terminal having a fastening region and a contact region, wherein the fastening region is positioned exterior to the interior defined by the body and the cap, and wherein the contact region is positioned within the interior defined by the body and the cap; and
an actuator having a first end and a second end, wherein the second end is in contact with the contact spring.

2. The system of claim 1, further comprising:
an extension conductor coupled to the fastening region of the terminal and extending through the second aperture to an exterior of the housing, the extension conductor having a conductive socket configured to receive a conductive connector from a photovoltaic module.

3. The system of one of the preceding claims, wherein the lid is hingedly coupled to the housing.

4. The system of one of the preceding claims, wherein the cap further comprises a recess, and wherein the actuator further comprises a protrusion configured to physically engage the recess in a holding position and physically disengage the recess in a receiving position, preferably wherein when the actuator is in the holding position, the actuator applies a force on the contact spring so that the contact spring pivots about the pivot pin toward the contact region of the terminal.

5. The system of one of the preceding claims, wherein the body further comprises (i) a cap protrusion configured to physically engage with a cap recess in the cap and (ii) a housing protrusion configured to physically engage with a mounting recess in the housing.

6. The system of one of the preceding claims, wherein the contact spring comprises a prong that engages a conductor inserted into the body of the pass-through connector when the actuator is in a holding position and applying a force onto an end of the contact spring opposite the prong.

7. The system of one of the preceding claims, wherein the actuator is configured to have bimodal stability with a first stable position in a receiving position and a second stable position in a holding position.

8. The system of one of the preceding claims, wherein the housing and lid have a height of less than 22 millimeters when coupled together; and/or wherein the actuator further comprises a fulcrum and a spring stop at the second end, wherein the spring stop and the fulcrum form a fork in the second end.

9. The system of one of the preceding claims, wherein the terminal further comprises at least one wing at the fastening region, wherein the at least one wing is configured to couple to a conductor positioned proximate to the fastening region, and/or wherein the terminal further comprises a locating region positioned between the cap and the body, wherein the locating region includes a first bend positioned proximate a wall of the body.

10. The system of one of the preceding claims, wherein the cap further comprises a first indication and the actuator comprises a second indication a distance from the first indication, wherein the distance is 20-25 millimeters.

11. A pass-through connector comprising:
a body having an interior curved edge;
a cap coupled to the body and defining an interior between the body and the cap, the cap comprising a pivot pin, wherein the pivot pin and the interior curved edge define a channel in the interior;
a contact spring positioned in part within the channel;
a terminal having a fastening region and a contact region, wherein the fastening region is positioned exterior to the interior defined by the body and the cap, and wherein the contact region is positioned within the interior defined by the body and the cap; and
an actuator having a first end and a second end, wherein the second end is in contact with the contact spring.

12. The pass-through connector of claim 11, wherein the terminal further comprises a locating region positioned between the cap and the body, wherein the locating region includes a first bend proximate a wall of the body; and/or wherein the terminal further comprises at least one wing at the fastening region, wherein the at least one wing is configured to couple to a conductor positioned proximate to the fastening region.

13. The pass-through connector of claim 11 or 12, wherein the cap further comprises a recess, and wherein the actuator further comprises a protrusion configured to physically engage the recess in a holding position and physically disengage the recess in a receiving position, preferably wherein when the actuator is in the holding position, the actuator applies a force on the contact spring such that the contact spring pivots about the pivot pin toward the contact region of the terminal.

14. The pass-through connector of one of claims 11 to 13, wherein the actuator is configured to have bimodal stability with a first stable position in a receiving position and a second stable position in a holding position.

15. A method comprising:
inserting a conductor into an enclosure, the enclosure comprising:
a housing defining a first aperture and a second aperture, wherein the conductor is inserted into the first aperture;
a lid removably coupled to the housing; and
a pass-through connector coupled to an interior surface of the enclosure, the pass-through connector comprising:
a body having an interior curved edge;
a cap coupled to the body and defining an interior between the body and the cap, the cap comprising a pivot pin, wherein the pivot pin and the interior curved edge define a channel in the interior;
a contact spring positioned in part within the channel;
a terminal having a fastening region and a contact region, wherein the fastening region is positioned exterior to the interior defined by the body and the cap, and wherein the contact region is positioned within the interior defined by the body and the cap; and
an actuator having a first end and a second end, wherein the second end is in contact with the contact spring;
inserting the conductor into the pass-through connector; and
actuating the actuator to apply a force to the contact spring to engage the conductor.
